# EUROPEAN PATENT APPLICATION

(11) **EP 4 024 369 A1**
(43) Date of publication of application: **06.07.2022**
(21) Application number: 21208636.7
(22) Date of filing: 16.11.2021
(51) Int. Cl.: G08G 5/00

(54) **FLIGHT LEG TERMINATION VISUALIZATION SYSTEMS AND METHODS FOR FLIGHT LEG TERMINATION VISUALIZATION**

(30) Priority: 04.01.2021 US 202117140275
(71) Applicant: GE Aviation Systems LLC, Grand Rapids, MI 49512 (US)
(72) Inventor: EDWARDS, Scott, Grand Rapids, 49512 (US)
(74) Representative: Openshaw & Co.

(57) **Abstract**

Various flight leg visualization techniques are enabled. For instance, a method comprises retrieving, by a flight management system from a navigation database, a route of an aircraft associated with the flight management system, determining, by the flight management system, leg terminations on the route, determining, by the flight management system, a leg termination of the leg terminations to display, and displaying, by the flight management system, the leg termination.

## Description

### TECHNICAL FIELD

The subject disclosure generally relates to flight leg termination visualization and, more particularly, to systems and computer-implemented methods that can facilitate visualization of aircraft, flight leg terminations, and flight plans.

### BACKGROUND

A flight management system (FMS), also referred to as a flight management computer (FMC), is integral to safe and efficient air travel. FMSs aid pilots and crew in adherence to a flight plan while combatting various intrinsic and extrinsic factors such as weather patterns, air traffic, aircraft conditions, etc. Implementation of FMSs in aircraft therefore improves situational awareness of the pilots and crew.

In the cockpit, pilots frequently interact with the FMS via a control display unit (CDU). However, interaction with any device inherently diverts attention from other activities. For this reason, a significant amount of input is provided prior to takeoff. Still, some functions are used mid-flight. For instance, a FIX INFO function of an FMS is very useful for pilots by placing a fix on a navigation display (ND). Showing flight leg terminations on an ND is helpful for the pilot or crew to understand what an aircraft can or cannot do in accordance with a flight plan. This can be particularly helpful for "floating" legs and associated terminations.

Some presently available FMSs have therein a FIX INFO function to display fixes on an ND. However, adding the fixes or terminations to a display is presently performed manually by a pilot or crewmember, which can be time consuming, tedious, and ultimately reduce situational awareness. Therefore, there exists a need to improve flight leg termination visualization which has the effect of increasing situational awareness.

The above-described background relating to FMSs and flight leg termination visualization is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus and/or computer program products that facilitate automatic flight leg visualization and/or modification are described.

According to one or more embodiments, a method is described herein. The method can comprise retrieving, by a flight management system from a navigation database, a route of an aircraft associated with the flight management system, determining, by the flight management system, leg terminations on the route, determining, by the flight management system, a leg termination of the leg terminations to display, and displaying, by the flight management system, the leg termination.

According to one or more embodiments, a system is described herein. The system can comprise a flight management computer, a processor, and a memory that stores executable instructions that, when executed by the processor, facilitate performance of operations, comprising: receiving, from a flight navigation database, a flight plan for an aircraft, determining a leg combination along the flight plan, generating a visual of a termination associated with the leg combination, and displaying the visual on a display communicatively coupled to the flight management computer.

According to one or more embodiments, a non-transitory machine-readable medium is described herein. The non-transitory machine-readable medium can comprise executable instructions that, when executed by a processor of a voice-activated device, facilitate performance of operations, comprising: determining whether a FIX INFO function of a flight management system of an aircraft is enabled, and in response to determining that the FIX INFO function is enabled: requesting a flight plan for the aircraft from a flight navigation database, in response to requesting the flight plan, receiving the flight plan from the flight navigation database, determining a group of ARINC 424 type leg combinations occurring along the flight plan, determining a termination of an ARINC 424 type leg combination of the ARINC 424 type leg combinations that satisfies a condition, and providing the termination on a display device of the aircraft.

### DESCRIPTION OF THE DRAWINGS

Various non-limiting embodiments of the subject disclosure are described with reference to the following figures, wherein like reference numerals refer to like parts throughout unless otherwise specified.
FIG. 1 is a diagram depicting systems relating to flight leg termination visualization in accordance with one or more embodiments described herein.
FIG. 2 is a diagram depicting systems relating to flight leg termination visualization in accordance with one or more embodiments described herein.
FIG. 3 is a diagram depicting systems relating to flight leg termination visualization in accordance with one or more embodiments described herein.
FIG. 4 is a diagram depicting systems relating to flight leg termination visualization in accordance with one or more embodiments described herein.
FIG. 5 is a diagram depicting systems relating to flight leg termination visualization in accordance with one or more embodiments described herein.
FIG. 6 is a diagram depicting systems relating to flight leg termination visualization in accordance with one or more embodiments described herein.
FIG. 7 is a diagram depicting systems relating to flight leg termination visualization in accordance with one or more embodiments described herein.
FIG. 8 is a flowchart of an example method for flight leg termination visualization in accordance with one or more embodiments described herein.
FIG. 9 is a flowchart of an example method for flight leg termination visualization in accordance with one or more embodiments described herein.
FIG. 10 is a flowchart of an example method for flight leg termination visualization in accordance with one or more embodiments described herein.
FIG. 11 is a block diagram of an example, non-limiting system that facilitates flight leg termination visualization in accordance with one or more embodiments described herein.
FIG. 12 is a block flow diagram for a method in which a route is retrieved, and a leg termination is ultimately displayed in accordance with one or more embodiments described herein.
FIG. 13 is a block flow diagram for a method in which a flight plan is received, and a visual ultimately displayed in accordance with one or more embodiments described herein.
FIG. 14 is a block flow diagram for a method in which a FIX INFO function state is determined, and a termination is ultimately provided in accordance with one or more embodiments described herein.
FIG. 15 is an example, non-limiting operating environment in which one or more embodiments described herein can be facilitated.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

Embodiments described herein provide methods and systems that facilitate improved situational awareness for flight crews and pilots. Various embodiments herein can determine whether a FIX INFO function (e.g., an automatic FIX INFO function) of an FMS is enabled. Corresponding methods or system can request a flight plan from a flight navigation database. After the request, the flight plan can be received from the flight navigation database. From the flight plan, a group of ARINC 424 type leg combinations (or non-ARINC 424 type leg combinations) occurring along the flight plan can be determined. A termination of an ARINC 424 type leg combination of the ARINC 424 type leg combinations that satisfies a condition can be determined. The termination that satisfies the condition can be provided to a display device of an aircraft or a ground-based surveillance system. This can be particularly helpful when an aircraft is maneuvering based on air traffic control (ATC) demand and temporarily not flying to a planned trajectory (e.g., lateral guidance).

Display devices can display an aircraft and its path along with an intended leg termination, thus enabling a visual representation or a computational representation of discrepancies between the aircraft path and an intended path along a leg. Likewise, visual or computational representations of an aircraft traveling according to an intended path along a leg are also enabled.

Display of the leg termination or aircraft path can be provided on a heads-up display of the aircraft. Some embodiments comprise two-dimensional (2D) visualizations while other embodiments comprise three-dimensional (3D) visualizations, or some combination of both.

Multiple leg combinations can exist on a flight plan or route, and an FMS can determine which leg combination termination to display. A determination of which leg termination to display can comprise a determination of an upcoming leg termination on the flight plan. Some embodiments enable display of more than one leg combination termination. A criterion or criteria can be employed to determine which leg termination or terminations to display (e.g., which termination or terminations are appropriate to display). A criterion can comprise, for example, a distance of a reference point from the aircraft. In this regard, effective automatic enablement of a FIX INFO function can be achieved, without significant, or in some cases any, user (e.g., pilot, flight crew) input.

Visualizations or visuals displayed can represent leg terminations or leg combination terminations. Flight paths that intersect with an area associated with the leg termination can be considered acceptable or valid solutions. Stated otherwise, aircraft headings that intersect an area or region associated with a termination can be considered valid, and headings that miss the area or region can be considered invalid or not acceptable. Such areas can comprise one or more of a variety of shapes. For instance, 2D areas can comprise circles, rectangles, cones, or any other suitable 2D shape. 3D areas can comprise cylinders, spheres, cuboids, or any other suitable 3D shape. Shapes or sizes of areas can be continuously updated by an FMS in response to changing factors. Such factors can be intrinsic such as fuel remaining, or extrinsic such as a weather condition.

Machine learning can be employed to dynamically determine and update a size or shape of a region. According to an embodiment, this can occur in real-time as conditions change. Conditions can comprise intrinsic or extrinsic factors. Intrinsic factors can comprise aircraft make, model, weight, fuel capacity, fuel level remaining, maintenance conditions, system faults, passenger load, cargo load, engine conditions, other suitable information relating to an aircraft, or other relevant intrinsic factors. Extrinsic factors can comprise weather conditions or patterns, air traffic, geographical conditions, or other relevant extrinsic factors.

Augmented reality or virtual reality can be employed in the display or visualization of legs, leg terminations, the aircraft, other aircraft, or other elements suitable for display or visualization. This can occur on a heads-up display, on a window of the aircraft, as a projection ahead or around the aircraft, or in/on another suitable surface or area. For example, an ARINC 424 type leg combination termination can be superimposed on an exterior or an interior view with respect to an aircraft or on an aircraft (e.g., using a heads-up display, augmented reality, virtual reality, or on/with another suitable display apparatus).

A display device can comprise an eyewear device/apparatus, such as glasses, goggles, a headset, a screen (e.g., LCD, LED, OLED, AMOLED, e-ink, or another suitable screen technology), or another suitable display device. Such eyewear, such as glasses, goggles, or headsets, can facilitate the display of a leg termination in virtual or augmented reality, though virtual or augmented reality visualizations can occur in other embodiments without eyewear devices or apparatuses.

Display devices can, in some embodiments, include a representation of the aircraft to provide context, and/or can show other aircraft within a specified range or vicinity of the aircraft. According to an embodiment, recognition of other aircraft, such as those that are identified or determined to intersect a leg or flight path of the aircraft, can be employed to prevent a collision between the aircraft and the other aircraft. In this regard, an autopilot component can alter a course of the aircraft, or an alert can be conveyed to a pilot or crew regarding a collision risk. Such alerts can comprise flashing lights or messages on a display device, audible messages from an FMS, or other suitable notifications.

The above aspects of the disclosure and/or other features of respective embodiments thereof are described in further detail with respect to the respective drawings below, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

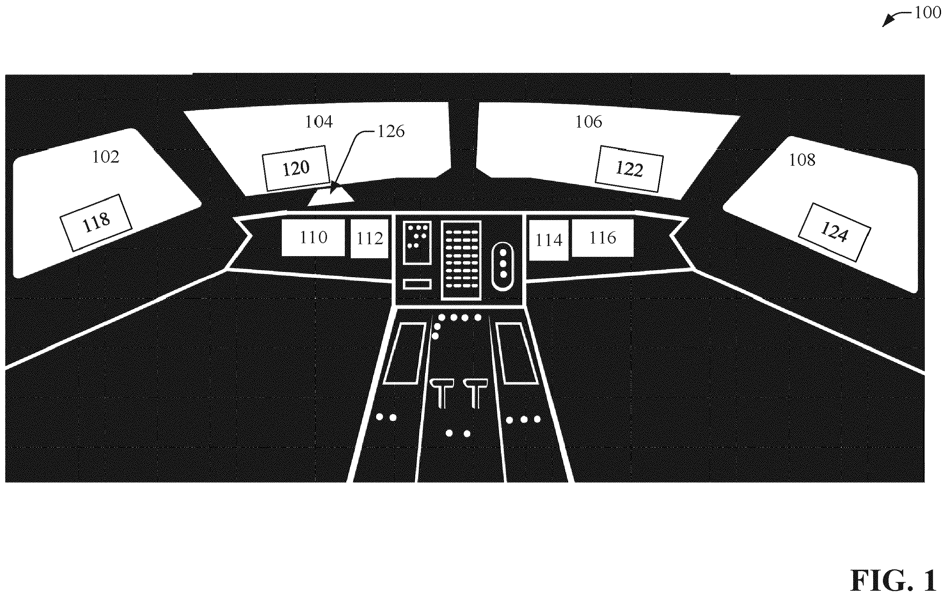

Turning now to FIG. 1, illustrated is a diagram of a cockpit 100 of an aircraft (e.g., an aircraft 202 or other like-aircraft which will be later discussed in greater detail). The cockpit 100 can comprise windows 102, 104, 106, and/or 108. The cockpit 100 can additionally comprise NDs 110 or 116, as well as CDUs 112 or 114. Windows 102-108 can comprise display portions 118-124. In this regard, window 102 can comprise display portion 118, window 104 can comprise display portion 120, window 106 can comprise display portion 122, and window 108 can comprise display portion 124. Further, the cockpit can comprise a heads-up display 126.

Display portions 118-124 can comprise sections of respective windows 102-108, on which flight mapping information (e.g., a leg combination termination) can be displayed. Such flight mapping information can comprise a leg, leg combination, leg combination termination, aircraft representation/depiction, flight path, fight route, distance measuring equipment (DME) circle, very high frequency omnidirectional range (VOR), a radial, a leg, a fix, an airport, a runway, a waypoint, non-directional beacon (NDB), other aircraft, or another element suitable for display on a display portion 118, 120, 122, or 124. According to an embodiment, a display portion 118-124 can comprise a portion of a respective window 102-108 on which a heads-up display unit 126 can project flight mapping information. According to another embodiment, a display portion 118-124 can comprise a transparent display panel (e.g., a transparent OLED screen or other suitable transparent screen), thus not requiring a projector to show flight mapping information.

According to yet another embodiment, the heads-up display unit 126 can comprise its own projector and display panel on which flight mapping information is projected. In this regard, such a display panel can be transparent such that a view looking outside of the aircraft from within can be maintained.

ND 110 or ND 116 can comprise an ND for use in a cockpit 100. In this regard, ND 110 or 116 can be fixed or removably secured (e.g., a tablet device removably mounted) within the cockpit 100. Similarly, CDU 112 or CDU 114 can comprise a CDU for use with aircraft FMSs. For instance, CDU 112 or 114 can comprise a FIX INFO function. According to an embodiment, CDU 112 or 114 can comprise an automated FIX INFO feature as taught herein.

It can be appreciated that the visualization component 1108, which will be later discussed in greater detail, can comprise any of windows 102-108, display portions 118-124, ND 110 or 116, CDU 112 or 114, heads-up display unit 126, or other suitable display apparatuses such as eyewear devices/apparatuses or other display apparatuses not yet discussed or as would be understood by one skilled in the art, omitted for sake of brevity.

In other embodiments, ND 110 or ND 116 (or visualization component 1108) can comprise a ND for use in a ground control station (GCS) (e.g., for use with an unmanned aircraft system or unmanned aerial vehicle (UAS or UAV)).

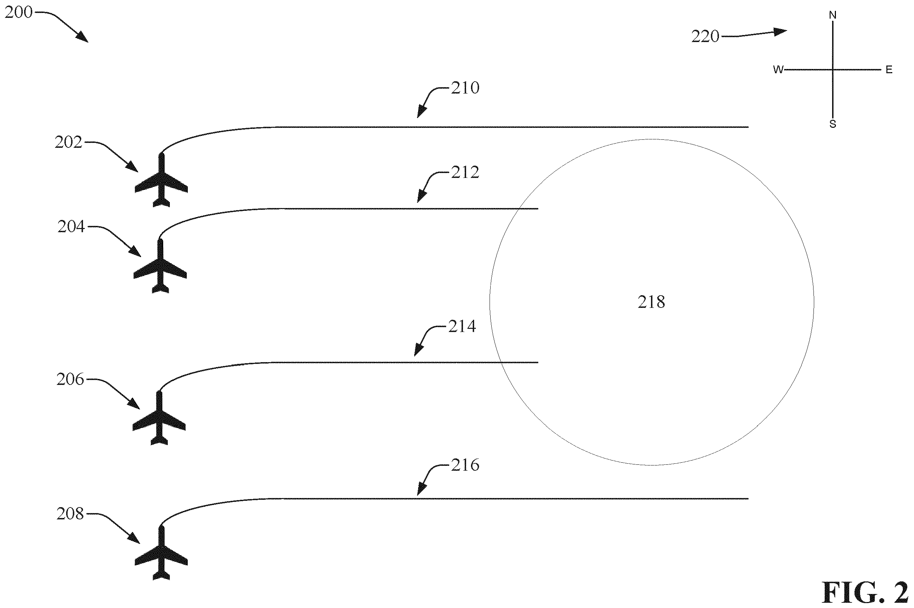

Turning now to FIG. 2, an exemplary display 200 is depicted. Display 200 depicts an example of what can be displayed on a visualization component 1108 or like component previously or later discussed. According to an embodiment, and as depicted in FIG. 2, the display 200 illustrates an ARINC 424 VD or CD leg termination. It can be appreciated that other suitable terminations as defined in ARINC 424 or another suitable standard can be displayed. The display 200 can comprise an aircraft 202, aircraft 204, aircraft 206, and/or aircraft 208. Aircraft 202 can comprise a solution 210, aircraft 204 can comprise a solution 212, aircraft 206 can comprise a solution 214, and aircraft 208 can comprise a solution 216.

Area 218 comprise a fix (e.g., a DME) in an associated flight plan. It can be appreciated that area 218 can alternatively comprise a VOR, NDB, airport, runway, waypoint, other aircraft, or other suitable reference point about which a fix, shape, region, or area can be generated. In this regard area 218 need not be fixed, meaning it can change positions. For instance, area 218 can comprise a ring around an "other aircraft". The circle can surround the "other aircraft and can track the movement of the "other aircraft". The pilot/crew of aircraft 208 can use this change in movement of the circle to follow the "other aircraft". According to an example, the circle (e.g., area 218) can instead comprise a semicircle instead of a full circle, or an entirely different such as an arc, semicircle, rectangle, square, or another suitable 2D or 3D shape.

Any of aircraft 202-208 can comprise the cockpit 100, and the depiction of aircraft 202-208 on the display 200 can represent a past, present, or future position of a single aircraft (e.g., at different points in time). Solutions that intersect the area 218 (e.g., solution 212 and solution 214) are considered valid. Solutions that miss the area 218 (e.g., solution 210 and solution 216) are considered invalid, not valid, or not acceptable. Compass 220 is herein depicted for exemplary purposes, however, some embodiments described herein can implement a compass 220 or a different a suitable dynamic directional aid on the display 200.

According to another embodiment, an aircraft being flown can comprise any combination of the aircraft 202-208. In other words, aircraft 202 can comprise an aircraft being flown, while aircraft 204-208 can comprise an "other aircraft" within the vicinity of the aircraft 202 being flown. In this regard, a pilot or crew can observe "other aircraft" that may, for example, be on their own trajectory for the same area 218. This way, a potential for collisions can be reduced by presenting alerts to a pilot or crew via an FMS, by causing an autopilot to alter course, or by another suitable collision mitigation method or system.

According to another embodiment, aircraft 202-208 can represent the same aircraft at different points in time. For instance, a single aircraft can be represented by aircraft 202-208. As an example, depicted herein, the aircraft can be flying due north and be awaiting a 90° turn east toward area 218, or awaiting a turn toward on specific radial toward area 218. Aircraft 208 can represent a position of the aircraft in the past, where making the 90° turn would have occurred too early and resulted in an invalid solution. Visualizing a turn that would be too early can help prevent a pilot or crew from making such an error. Aircraft 206 can represent the aircraft in present time, where immediately making a 90° turn would result in a valid solution. Aircraft 204 can represent the aircraft in a future time, where making a 90° would still result in a valid solution. Aircraft 202 can represent the aircraft in a future time, later than the time represented by aircraft 204. By the time the aircraft reaches a position represented by aircraft 202, it would be too late for the aircraft to make an acceptable 90° turn to intersect area 218. This information can be particularly helpful for a pilot crew, in that the pilot or crew can visualize where the pilot/crew was supposed to turn, and where an aircraft is geographically located in present time. It should be appreciated that the display 200 need not display multiple aircraft 202-208 at once, and that some embodiments only display one aircraft from the group of aircraft 202-208. In this regard, an aircraft (e.g., aircraft 206) can be displayed at a current position in current time. This position can dynamically change with actual movement of the aircraft 206.

According to some embodiments, an FMS (e.g., FMS 1102) can utilize machine learning to dynamically update the number of solutions at varying positions and points in time on the display 200. In this regard, FMS 1102 using machine learning may determine that depicting four solutions (e.g., 210, 212, 214, and 216) would be optimal. It can be additionally appreciated that the number of solutions depicted can be based on pilot/crew preferences. Further, an FMS can utilize machine learning to determine preferences of specific pilots or crew members and create electronic profiles for such pilots or crew members so that configurations presented are useful to the pilots/crew. Limiting the number of solutions can be particularly helpful for decluttering a display (e.g., display 200).

Additionally, the circle comprising area 218 can dynamically change shape or size depending on a singularity or plurality of intrinsic or extrinsic variables. Providing this circle (or other shape) aids in visualizing the target of a leg. In various cases, the invention can leverage machine learning pattern recognition, trained via supervised learning, to compare current and baseline flight mapping information and to analyze such intrinsic or extrinsic variables. Based on such comparisons and analyses, an appropriate shape and size for the acceptable region (also referred to as zone or area) of which acceptable solutions intersect, can be determined. In various embodiments, an FMS (e.g., FMS 1102) as aided by a machine learning component (e.g., machine learning component 1112) can make recommendations for when to make a heading change based on the validity or invalidity of possible solutions and/or other intrinsic or extrinsic variables/factors.

It can be appreciated that while the circle (or other suitable shape) about area 218 is herein depicted with a solid line, other line types can be utilized, such as a dashed line or another suitable line type. Likewise, while the solutions 210-216 are herein depicted with solid lines, other line types can be utilized, such as dashed lines or other suitable line types.

According to an embodiment, the display 200 can be aircraft centric. In this regard, an aircraft (e.g., aircraft 206) remains in a relatively stationary position on the display 200 (e.g., centered) and the geography moves and rotates with respect to movement of the aircraft 206. Other embodiments can be geography centric. In this regard, the geography (e.g., area 218) remains fixed and an aircraft (e.g., aircraft 206) moves/rotates on the display in association with actual movement of the physical aircraft represented by the aircraft 206 on the display 200. In this regard, the aircraft 206 can move and rotate and an area (e.g., area 218) remains fixed in place on the display 200. Other displays described herein (e.g., display 300, display 400, display 500, display 600, display 700) can similarly be aircraft centric or geography centric. An FMS comprising such a display can comprise dual capability, and can therefore be toggled between view-types or can automatically determine an appropriate display mode using machine learning. It can be appreciated that additional view types can be implemented or utilized in embodiments herein, and the invention herein is not limited to two display modes.

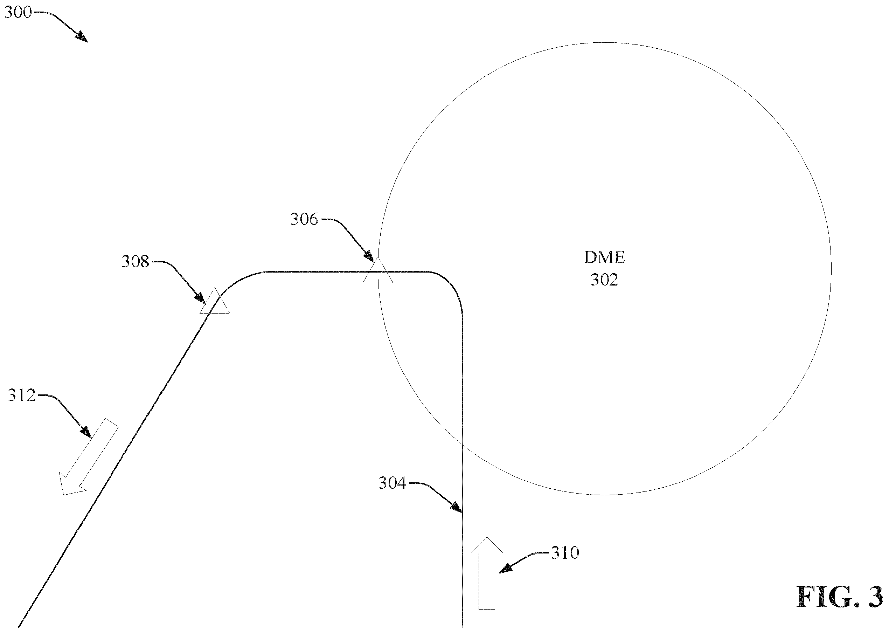

Now with reference to FIG. 3, an exemplary display 300 is depicted. Display 300 depicts an example of what can be displayed on a visualization component 1108 or a like-component previously or later discussed. According to an embodiment, as depicted in FIG. 3, the display 300 illustrates an ARINC 424 VD or CD leg termination. It can be appreciated that other suitable terminations as defined in ARINC 424 or another suitable standard can be displayed. According to an embodiment, and as depicted herein, display 300 does not depict and aircraft (e.g., like aircraft 202), however alternate embodiments an include aircraft depictions similar to those depicted and discussed regarding FIG. 2. As with display 200, the display 300 can comprise an aircraft centric view, a geography centric view, or a different suitable view.

According to an embodiment, display 300 includes a DME 302, a flight path 304. waypoint 306, waypoint 308, and directional guides 310 and/or 312. DME 302 can be similar to area 218, and the range ring surrounding DME 302 can be similar to the circle comprising area 218. The range ring about DME 302 can comprise a solid line, dashed line, or another suitable line type. Additionally, the range ring about DME 302 can be a set color (e.g., yellow). The color can be predefined, according to a preference, set using machine learning to determine to an optimal color based on a singularity or plurality of conditions (e.g., time of day, light conditions, colorblindness of pilot or crew, or other suitable conditions). A color (e.g., magenta) of the flight path 304 can likewise be predefined, according to a preference, set using machine learning to determine to an optimal color based on a singularity or plurality of conditions (e.g., time of day, light conditions, colorblindness of pilot or crew, or other suitable conditions). An outline or fill of DME 302 can change color in response to a solution being on track to be valid or invalid. For example, an outline or fill of DME 302 can be green when an aircraft is within the DME 302 circle or on target to be within it. An outline or fill of the DME 302 can be yellow when an aircraft is at risk of engaging in an invalid solution (e.g., close to leaving the circle). An outline or fill of DME 302 can be red when an aircraft is presently on an invalid solution. This can occur when an aircraft is outside the DME 302. According to an example, the color can change from red to yellow (or green) when an aircraft is closer to switching from an invalid to valid solution (e.g., aircraft changes heading from missing DME 302 to being pointed toward DME 302).

Waypoint 306 can represent a termination of a CD leg. According to an example, similar conditions can occur for VI-AF or CI-AF leg combinations (where the termination is defined as a semi-circular target instead of a full circle/range ring). In this regard, a heading-to-intercept arc-to-fix can be represented with a semicircle. The ideal boundaries of the semi-circular target or range ring can be clearly and automatically displayed to the flight crew or pilot.

Directional guides 310 or 312 can be optionally included on the display 300. Directional guides 310 or 312 can be enabled when the direction or travel is not immediately clear. According to an example, an FMS can utilize machine learning or artificial intelligence to determine whether the directional guides 310 or 312 are needed.

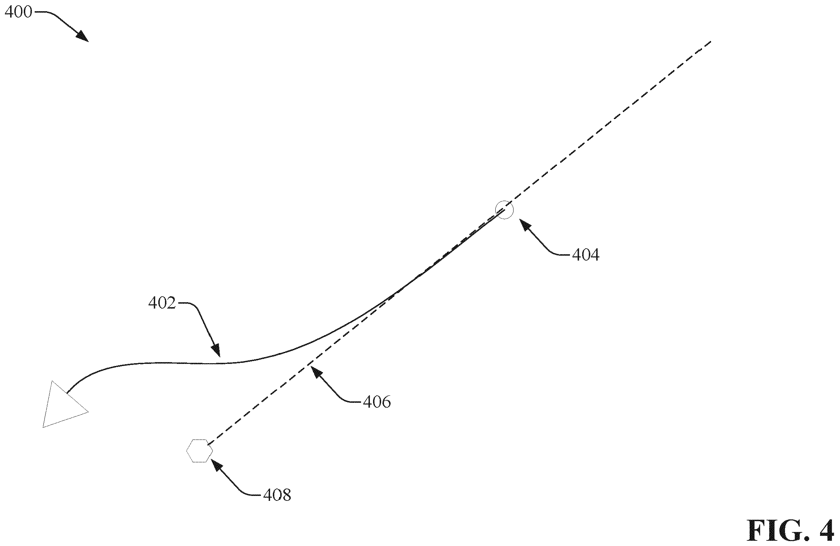

Turning now to FIG. 4, an exemplary display 400 is depicted. Display 400 depicts an example of what can be displayed on a visualization component 1108 or a like-component previously or later discussed. According to an embodiment, as depicted in FIG. 4, the display 400 illustrates an ARINC 424 FA leg. It can be appreciated that other suitable terminations as defined in ARINC 424 or another suitable standard can be displayed. According to an embodiment, and as depicted herein, display 400 does not depict and aircraft (e.g., an aircraft like aircraft 202), however alternate embodiments an include aircraft depictions similar to those depicted and discussed regarding FIG. 2.

Flight path 402 can comprise a flight path according to a flight plan for an aircraft which can be provided on a display 400. An FMS can generate on a display 400 a reference fix 408 and a reference radial 406. An FMS can further determine a point 404, which can comprise an FMS-computed point for the altitude corresponding to the FA leg. In this regard, an aircraft is flying from a fix to an altitude. By illustrating the reference fix 408, reference radial 406, and/or point 404, a pilot or crew has greater visibility and insight into how far along a reference radial an aircraft should fly before changing direction.

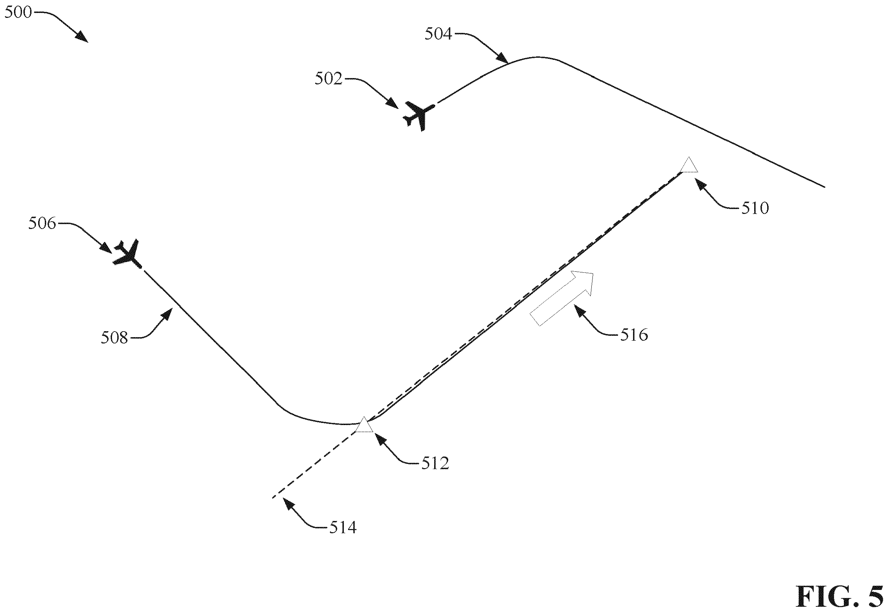

With reference to FIG. 5, an exemplary display 500 is depicted. Display 500 depicts an example of what can be displayed on a visualization component 1108 or a like-component previously or later discussed. According to an embodiment, as depicted in FIG. 5, the display 500 illustrates an ARINC 424 CF termination (e.g., of a VI-CF leg or a CI-CF leg), which can aid a pilot or crew where they should have terminated in a missed intersection (e.g., an invalid solution/case). Aircraft 502 on path 504 represents an invalid case. Aircraft 506 on path 508 represents a valid case. It can be appreciated that, while aircraft 502 and 506 are both depicted on display 500 at the same time, this is herein for purposes of illustration and the display 500 can alternatively display only one aircraft (e.g., aircraft comprising cockpit 100 in real time and in space). As depicted, aircraft 502 misses termination CF inbound course 514 to the CF termination fix 510. Aircraft 506 on path 508, representing a valid solution, adequately intercepts at intercept 512 for the CF termination fix 510. It can be appreciated that arrow 516 shows an intended direction of travel, and can be optionally included in images generated on the display 500 (e.g., using machine learning to determine whether the arrow 516 should be included). According to other embodiments, arrow 516 is not included.

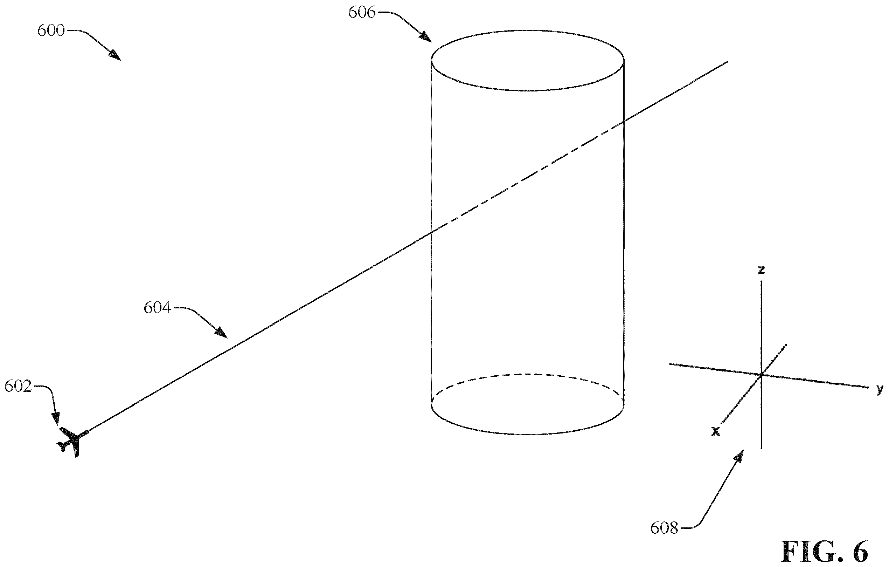

Turning now to FIG. 6, there is illustrated an exemplary display 600. Display 600 depicts an example of what can be displayed on a visualization component 1108 or a like-component previously or later discussed. According to an embodiment, as depicted in FIG. 6, the display 600 illustrates an ARINC 424 VD or CD termination. FIG. 6 represents a 3D depiction that can be provided on a display 600. Aircraft 602 can be similar to other aircraft described herein. For example, aircraft 602 can comprise a cockpit 100. Path 604 can represent a trajectory of the aircraft 602 based upon its current heading or direction of travel. Cylinder 606 can comprise a DME. Cylinder 606 can alternatively comprise a VOR, NDB, airport, runway, waypoint, other aircraft, or other suitable reference point about which a fix, shape, region, or area can be generated. Cylinder 606 can extend upward from a ground surface. In this regard, the aircraft 602 intersect cylinder 606 at a plurality of altitudes that represent valid solutions. The cylinder 606 can be infinity tall, however, according to an embodiment, placement of the cylinder in space, and dimensions of the cylinder, can be determined based upon safe or possible solutions that can be achieved by the aircraft 602. In this regard, a maximum safe altitude represented by a maximum height of the cylinder 606, and a minimum safe altitude can be represented by a minimum height of the cylinder 606. Such safe altitudes can be determined from, for instance, flight data 1126 (later discussed in greater detail). A reference coordinate system 608 can be optionally included.

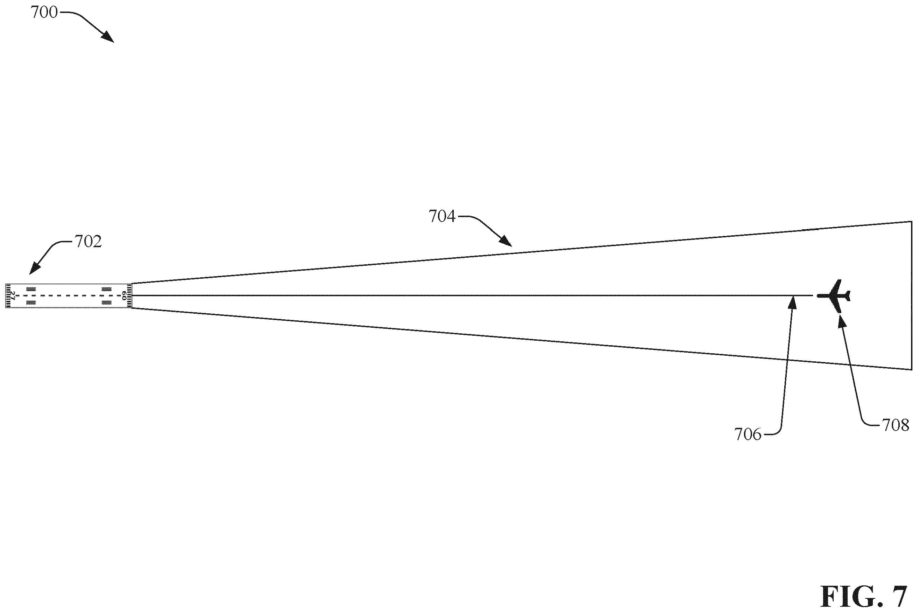

Turning now to FIG. 7, there is illustrated an exemplary display 700. Display 700 depicts an example of what can be displayed on a visualization component 1108 or a like-component previously or later discussed. According to an embodiment, as depicted in FIG. 7, the display 700 illustrates a final approach (e.g., to a runway, a localizer landing system, or FMS landing system). The region 704 can represent desired capture region. In this regard, an aircraft should be within the region 704 during final approach to the runway 702. This can have the intended effect of stabilizing a final approach. As depicted herein, aircraft 708 on trajectory 706 is within the region 704 and is on target. In this regard, aircraft 708 represents a valid case. An outline or fill of the region 704 can change color in response to a solution being on track to be valid or invalid. For example, an outline or fill of a region (e.g., region 704) can be green when an aircraft (e.g., aircraft 708) is within the region 704 or on target to be within the region 704. An outline or fill of a region 704 can be yellow when an aircraft (e.g., aircraft 708) is at risk of engaging in an invalid solution (e.g., close to an edge of a region or on a heading to exit a region). An outline or fill of a region can be red when an aircraft is presently engaging in an invalid solution. This can occur when an aircraft is outside the region (e.g., region 704). According to an example, the color can change from red to yellow when an aircraft is closer to switching from an invalid to valid solution (e.g., aircraft changes heading from missing the region to being pointed toward region).

Such color coordination can be implemented in other embodiments for other regions or areas, such as area 218, DME 302, or cylinder 606. Similar color coordination can be utilized for radials (e.g., radial 406, inbound course 514). In this regard, color can similarly change in response to an aircraft being on target to reach a radial, or other line, with a valid case or invalid case (e.g., green for on target for valid solution, yellow for at risk, red for on target for invalid solution).

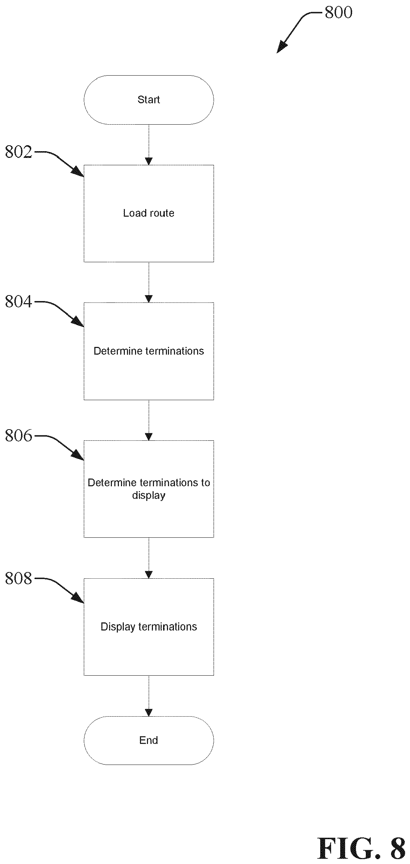

With reference to FIG. 8, there is illustrated a flowchart of a process 800 for displaying leg terminations. At 802, a route can be loaded (e.g., from a flight navigation database). Such a navigation database can be downloaded to an FMS and stored within FMS memory. According to an example, the navigation database can be regularly updated (e.g., once per month), in order to keep the navigation database up to date. At 804, terminations along the route can be determined. In this regard, an FMS can evaluate a route and determine the various legs along the route. From the various legs, corresponding leg terminations can be determined. At 806, from the terminations determined to be on the route, the appropriate termination(s) to display can be determined. Terminations can be determined to be appropriate or not appropriate based upon a criterion or criteria, such as distance (e.g., within a threshold distance) between aircraft and termination, whether the termination comprises a GOTO termination, the number of terminations ahead, determined using machine learning, or with another suitable criteria discussed herein or as would be suitable. It can be appreciated that multiple terminations can be evaluated to determine whether zero, a singularity, or a plurality of leg terminations satisfy a criterion (e.g., distance between a termination and aircraft less than a threshold distance). At 808, the appropriate termination(s) to display can be displayed (e.g., on a visualization component 1108).

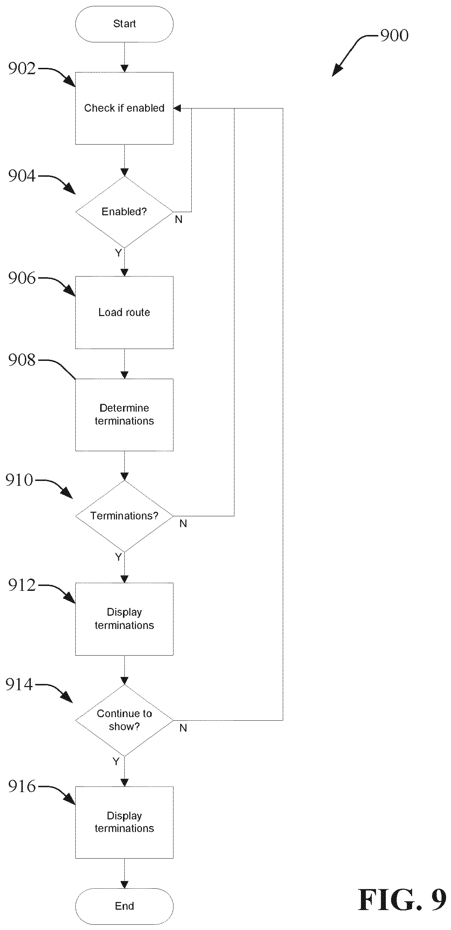

Turning now to FIG. 9, there is illustrated a flowchart of a process 900 for displaying leg terminations. At 902, at determination can be made regarding whether leg termination display is enabled. This can comprise determining whether an automated FIX INFO function is enabled, which can be enabled by default or can be disabled by default. At 904, if enabled, the process proceeds to 906. If at 904, leg termination display is not enabled, the process returns to 902. At 906, a route can be loaded (e.g., from a flight navigation database). At 908, terminations along the route can be determined. At 910, if terminations along the route exist, the process can proceed to 912. If terminations do not exist on the route, or are otherwise unavailable, the process can return to 902. At 912, termination(s) to display can be displayed. The terminations can comprise terminations that are appropriate to display. Criteria for appropriateness can be similar to those discussed above regarding step 806. At 914, if a system is to continue to display terminations, the process can proceed to 916. If at 914, a system is not to continue to display terminations (e.g., last termination already displayed, last termination for a segment of a route displayed, user disabled, or for some other suitable reason to not display terminations), the process can return to 902. At 916, appropriate terminations can be displayed (e.g., on a visualization component 1108).

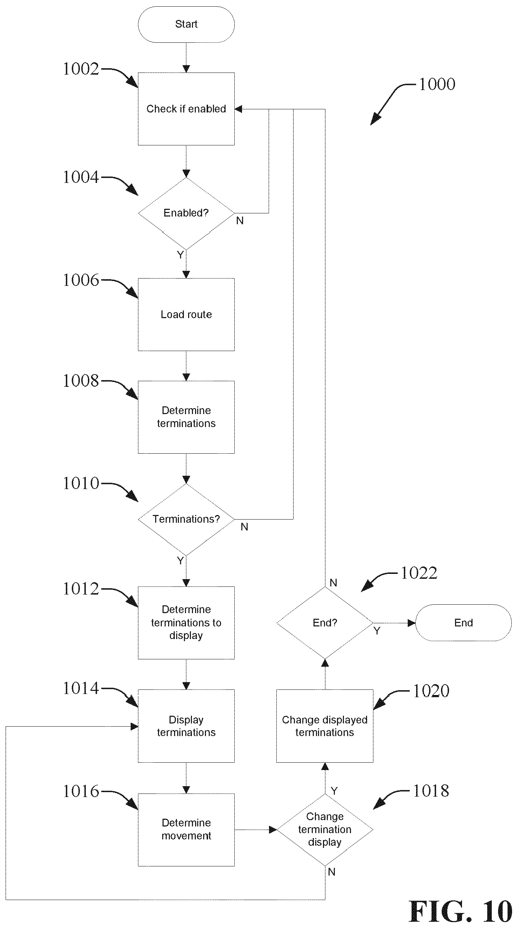

With reference to FIG. 10, there is illustrated a flowchart of a process 1000 for displaying leg terminations. At 1002, at determination can be made regarding whether leg termination display is enabled. At 1004, if enabled, the process proceeds to 1006. If at 1004, leg termination display is not enabled, the process returns to 1002. At 1006, a route can be loaded (e.g., from a flight navigation database). At 1008, terminations along the route can be determined. At 1010, if terminations along the route exist, the process can proceed to 1012. If terminations do not exist or are unavailable, the process can return to 1002. At 1012, from the terminations determined to be on the route, the appropriate termination(s) to display can be determined. Criteria for appropriateness can be similar to those discussed above regarding step 806 or 912. At 1014, the appropriate termination(s) to display can be displayed (e.g., on a visualization component 1108). At 1016, geographical movement of an aircraft can be determined. This can occur, for example, while an aircraft is traveling along a route. When movement occurs, an aircraft can proceed through one leg and move on to the next one. When this occurs, a different leg can be displayed, thereby enabling relevant information to be continued to be displayed at all times. At 1018, if the termination(s) displayed should not change (e.g., the next/upcoming termination has not changed or no new terminations are within a defined range of the aircraft), the process returns to 1014. At 1018, if the termination(s) displayed should change (e.g., aircraft passes a termination or an upcoming termination becomes within a defined range of the aircraft), the process proceeds to 1020. At 1020, the different (appropriate) termination(s) are displayed. At 1022, if the process is not to end (e.g., system still enabled, route not over, or more upcoming leg terminations), the process returns to 1002. If at 1022, the process is to end (e.g., aircraft landed), then the process ends.

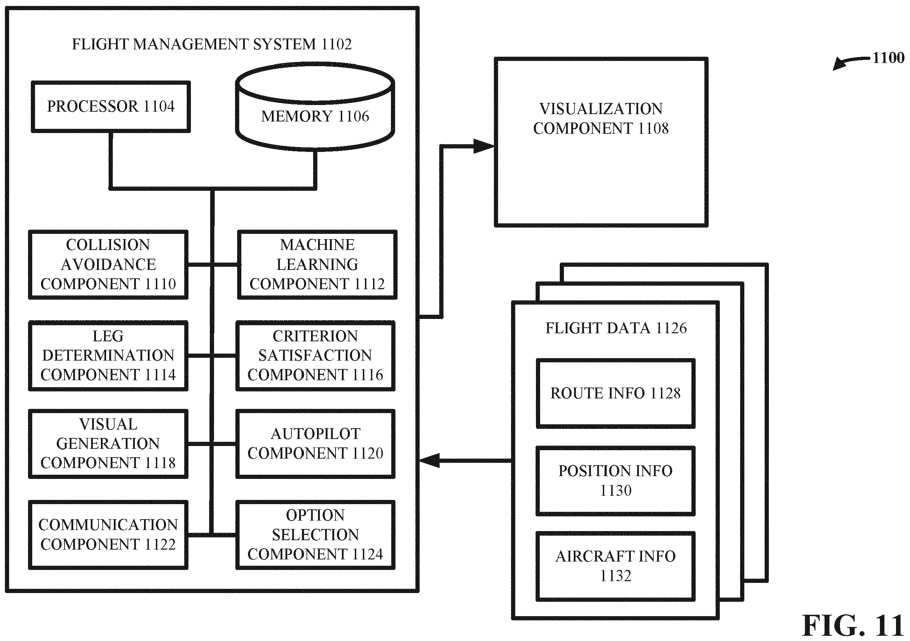

Turning now to FIG. 11, there is illustrated an example, non-limiting system 1100 that can facilitate leg termination display in accordance with one or more embodiments described herein. As shown, flight management system (FMS) 1102 an access various flight data 1126. Flight data 1126 can comprise, but is not limited to, route information 1128, position information 1130, and/or aircraft information 1132. Route information 1128 can additionally/alternatively comprise a route from a flight navigation database. Route information 1128 can comprise legs occurring on a route, weather information, air traffic information, or other suitable route information. Position information 1130 can comprise information relating to an aircraft's position. For instance, the position information 1130 can comprise altitude, heading, latitude, longitude, roll, pitch, yaw, or other suitable positional information. The position information 1130 can additionally/alternatively comprise information relating to other aircraft in a vicinity or within a range of the aircraft comprising the flight management system 1102. Aircraft information 1132 can comprise information concerning an aircraft comprising the FMS 1102. Such information can comprise aircraft make, model, weight, fuel capacity, fuel level remaining, maintenance conditions, system faults, passenger load, cargo load, engine conditions, or other suitable information relating to an aircraft comprising an FMS 1102.

FMS 1102 can comprise a processor 1104 (e.g., computer processing unit, microprocessor, and so on) and a computer readable memory 1106 that is operably and/or operatively and/or communicatively connected/coupled to the processor 1104. The memory 1106 can store computer-executable instructions which, upon execution by the processor 1104, can cause the processor 1104 and/or other components of the FMS 1102 (e.g., visualization component 1108, and so on) to perform one or more acts. In various embodiments, the memory 1106 can store computer-executable components (e.g., visual generation component 1118, criterion satisfaction component 1116, and so on), and the processor 1104 can execute the computer-executable components. It can be appreciated that the FMS 1102 can be communicatively coupled to the visualization component 1108.

FMS 1102 can comprise a collision avoidance component 1110. The collision avoidance component 1110 can utilize flight data 1126 or other suitable information to prevent a collision with a building, ground, object, or another aircraft or vehicle. The collision avoidance component 1110 can additionally generate a notification (e.g., on a visualization component 1108) if a current, future, or possible trajectory poses a risk of resulting in a collision.

FMS 1102 can comprise a machine learning component 1112. In various embodiments, a machine learning algorithm can be used to facilitate leg termination visualization or other FMS functions, such as modifying a shape or size of a region, change the number of solutions displayed on a display (e.g., visualization component 1108), learn pilot or crew preferences for FMS systems or other cockpit 100 configurable items, making a recommendation for when to make a heading change based on the validity or invalidity of possible solutions and/or other intrinsic or extrinsic variables/factors, determining an appropriate view type, determining appropriate colors for regions, aircrafts, outlines, or other elements depicted on a visualization component 1108, determining whether to include directional arrows, or other elements suitable for improvement via machined learning. In various cases, the machine learning algorithm can be trained (e.g., via supervised learning, unsupervised learning, reinforcement learning, and so on) to recognize which termination to display, a level of zoom to apply, a recommendation for valid solutions for satisfying a leg on a flight plan, or other suitable functions aided by machine learning.

In various embodiments, a trained machine learning and/or pattern recognition algorithm can include any suitable mathematical, statistical, and/or computational classification technique. For instance, in various embodiments, a trained machine learning and/or pattern recognition algorithm can include any suitable mathematical, statistical, and/or computational technique that can be trained (e.g., via supervised learning on known data sets) to classify an input data set into one or more output classifications (e.g., to detect patterns and/or signatures in an input data set and to correlate the detected patterns and/or signatures to one or more states of the input data set). In various embodiments, a trained machine learning and/or pattern recognition algorithm can comprise one or more linear classifiers (e.g., generative classifiers such as Naive Bayes, linear discriminant analysis, and so on; discriminative classifiers such as logistic regression, perceptron, support vector machines, and so on; linear affine transformations optimized to achieve global minima; and so on). In various embodiments, a trained machine learning and/or pattern recognition algorithm can comprise one or more non-linear classifiers (e.g., artificial neural networks, non-linear and/or high dimensional support vector machines, and so on).

To facilitate the above-described machine learning aspects of various embodiments of the subject claimed innovation, consider the following discussion of artificial intelligence. Various embodiments of the present innovation herein can employ artificial intelligence (AI) to facilitate automating one or more features of the present innovation. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute, and so on) of the present innovation, components of the present innovation can examine the entirety or a subset of the data to which it is granted access and can provide for reasoning about or determine states of the system, environment, and so on from a set of observations as captured via events and/or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events and/or data.

Such determinations can result in the construction of new events or actions from a set of observed events and/or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes and/or systems (e.g., support vector machines, neural networks, expert systems, Bayesian belief networks, fuzzy logic, data fusion engines, and so on) in connection with performing automatic and/or determined action in connection with the claimed subject matter. Thus, classification schemes and/or systems can be used to automatically learn and perform a number of functions, actions, and/or determinations.

A classifier can map an input attribute vector, z = (z1, z2, z3, z4, *zn*), to a confidence that the input belongs to a class, as by f(z) = *confidence*(*class*). Such classification can employ a probabilistic and/or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, and/or probabilistic classification models providing different patterns of independence, any of which can be employed. Classification as used herein also is inclusive of statistical regression that is utilized to develop models of priority.

Still with reference to FIG. 11, the leg determination component 1114 can determine a leg(s) on a route and/or determine appropriate leg termination(s) to display, for example, on a visualization component 1108. An appropriate leg to display can comprise an upcoming leg, or an upcoming set of legs, along a route.

According to an example, an aircraft may have completed legs 1 and 2 out of a total of 5 legs. The leg determination component can determine to display leg terminations 3 and 4 on a visualization component 1108. Leg terminations 3 and 4 can satisfy a criterion or criteria as determined by criterion satisfaction component 1116. In this regard, leg terminations 3 and 4 can be within a defined distance of an aircraft comprising an FMS 1102 (e.g., 500 nautical miles) and represent future legs, and therefore satisfy these criteria. Leg termination 5 can be 550 miles away, meaning that it would not satisfy the distance criterion until the aircraft comprising the FMS 1102 is at least 50 nautical miles closer to leg termination 5. This can be helpful for decluttering a display (e.g., a display 200). Other embodiments can display only a GOTO, or next leg termination, and omit other past or future leg terminations. It can be additionally appreciated that machine learning can be leveraged (e.g., using machine learning component 1112) to display an optimal quantity of leg terminations to reduce display clutter and improve situational awareness.

Visual generation component 1118 can generate images, renderings, photos, videos, overlays, or other suitable visuals. Such visuals can be output to a visualization component 1108. Legs, leg terminations, fixes, references, waypoints, other aircraft, or other suitable navigational aids or points/objects of interest can be rendered for output on a visualization component 1108, by the visual generation component 1118.

The visualization component 1118 can comprise a heads-up display (e.g., heads-up display 126). In this regard, a heads-up display can show leg terminations (e.g., see FIGs. 2-7) in a position that a pilot or crew does not need to look down to observe the contents of the display (e.g., in front of a window such as window 104).

The visualization component 1118 can comprise a 2D or 3D animation (e.g., AR, VR) of leg terminations (e.g., see FIGs. 2-7). In this regard, the visualization component 1118 can comprise an eyewear device/apparatus, such as glasses, goggles, or a headset. Such eyewear can facilitate the display of a leg termination in virtual or augmented reality, though virtual or augmented reality visualizations can occur in other embodiments without eyewear devices/apparatuses, such as projected by a heads-up display or otherwise projected.

The visualization component 1118 can comprise a conventional ND screen. In this regard, visualizations (e.g., see FIGs. 2-7) can be displayed on the ND screen. The visualization component 1118 can comprise a CDU. In this regard, visualizations (e.g., see FIGs. 2-7) can be displayed on the CDU.

According to additional embodiments, the visualization component can comprise windows, display portions of windows, or other suitable surfaces (e.g., see FIG. 1).

According to yet another embodiment, the visualization component 1108 can comprise a passenger display device. In this embodiment, a passenger of an aircraft equipped with an FMS 1102 can view the aircraft and its positional relationship to a leg termination. This way, a passenger can have insight into an aircraft's actions (e.g., missed a turn and circling back to attempt again). A passenger display device can comprise a screen affixed to seat (e.g., back of a headrest), cabin ceiling, or other suitable location. Other embodiments can leverage a passenger's personal device (e.g., smartphone, tablet, smartwatch, other wearable, smart glasses, or other suitable personal device) for display of display content (e.g., see FIGs. 2-7). According to an example, an FMS can pair to an app (e.g., a smartphone app) directly or indirectly (e.g., via an airline server) to display location information (e.g., aircraft with respect to a leg or leg termination) for a flight that a passenger is taking or otherwise interested in tracking. According to an example, the communication component 1122 can connect to a passenger device to send such information.

An FMS 1102 can comprise an autopilot component 1120. The autopilot component 1120 can, for instance, execute valid solutions discussed above, and avoid invalid solutions. The autopilot component 1120 can additionally leverage machine learning to determine optimal solutions for leg terminations along the route and travel according to such optimal solutions.

Communication component 1122 can comprise various hardware or software components suitable for communication with other components of an aircraft, between multiple aircrafts, or between and aircraft and an external location, such as an air traffic controller. According to an example, this can occur over wired connections, or wirelessly via radio, cellular connections (e.g., 5G, 4G, 3G, 2G, or other suitable cellular connections), or other suitable communication mediums.

Option selection component 1124 can comprise software or physical mediums suitable for enabling or disabling FMS 1102 options, such as a leg termination visualization function. For instance, FMS 1102 can generate leg termination visualizations by default, however, a pilot or crew member can disable leg termination visualization generation component 1118 such that it does not generate visualizations of leg terminations for a visualization component 1108. Enabling or disabling can be achieved through input via FMS 1102 software or through a physical button on a control panel of the FMS 1102.

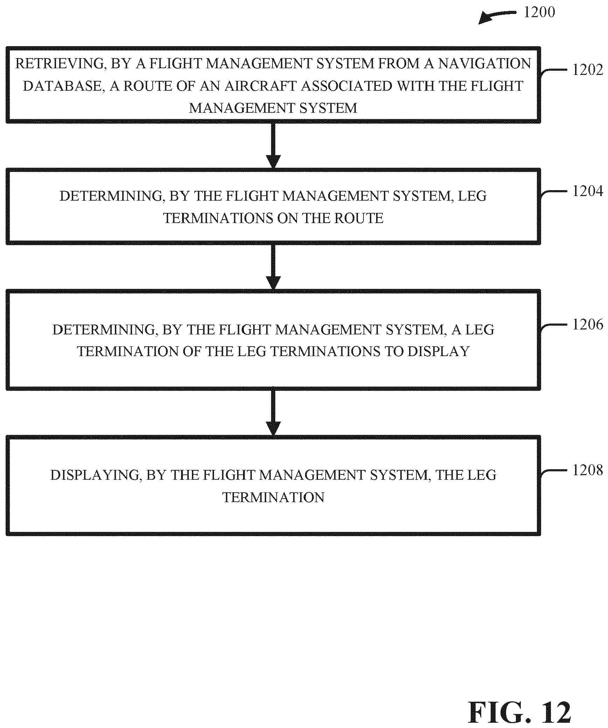

FIG. 12 illustrates a flow diagram of a process 1200 for flight leg termination visualization in accordance with one or more embodiments described herein. At 1202, a route of an aircraft associated with a flight management system can be retrieved by a flight management system from a navigation database. At 1204, leg terminations on a route can be determined by the flight management system. At 1206, a leg termination of the leg terminations can be determined to be displayed by the flight management system. At 1208, the leg termination can be displayed by the flight management system.

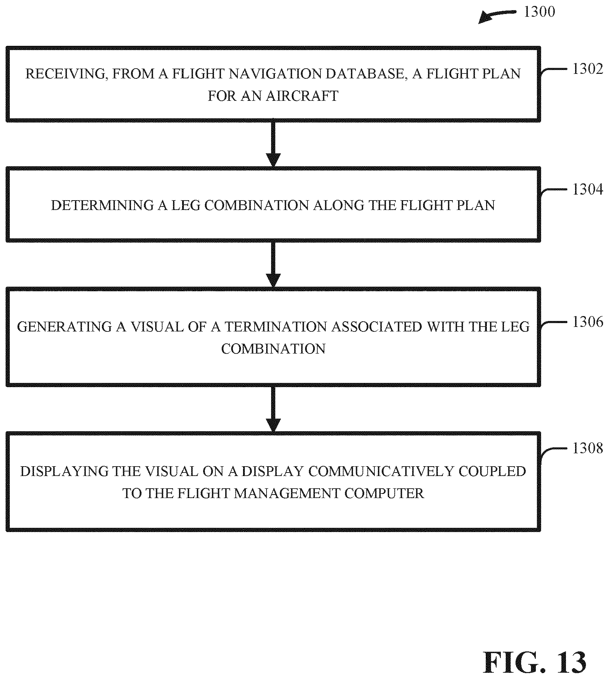

FIG. 13 illustrates a flow diagram of a process 1300 for flight leg visualization in accordance with one or more embodiments described herein. At 1302, a flight plan for an aircraft is received from a flight navigation database. At 1304, a leg combination along the flight plan is determined. At 1306, a visual associated with the leg combination is generated. At 1308, the visual is displayed on a display communicatively coupled to a flight management computer.

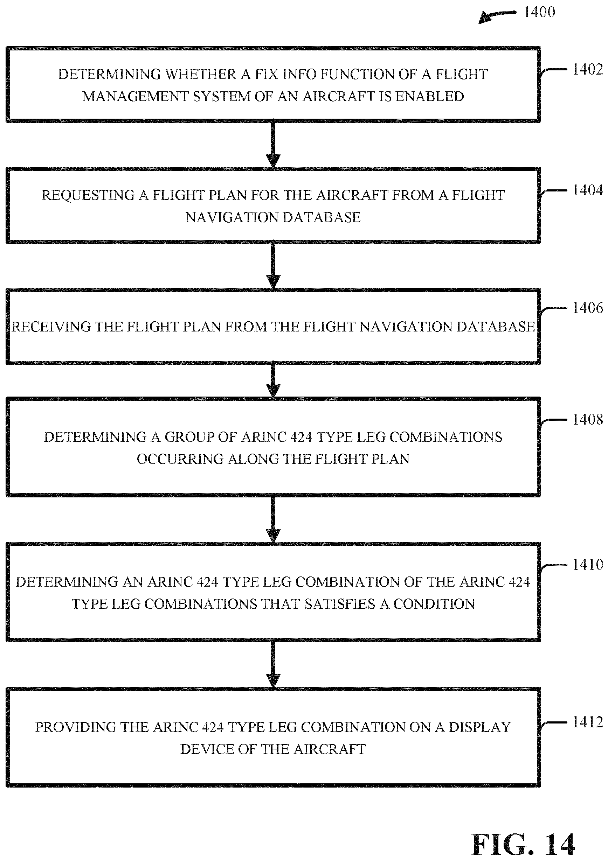

FIG. 14 illustrates a flow diagram of a process 1400 for flight leg visualization in accordance with one or more embodiments described herein. At 1402, it is determined whether a FIX INFO function of a flight management system of an aircraft is enabled. At 1404, a flight plan for the aircraft is requested from a flight navigation database. At 1406, a flight plan is received from the flight navigation database. At 1408, a group of ARINC 424 type leg combinations occurring along the flight plan are determined. At 1410, an ARINC 424 type leg combination of the ARINC 424 type leg combinations that satisfied a condition is determined. At 1412, the ARINC 424 type leg combination is provided on a display device of the aircraft.

FIGS. 8-10 and 12-14 as described above illustrate respective methods or systems in accordance with certain aspects of this disclosure. While, for purposes of simplicity of explanation, the methods or systems are shown and described as a series of acts, it is to be understood and appreciated that this disclosure is not limited by the order of acts, as some acts may occur in different orders and/or concurrently with other acts from those shown and described herein. For example, those skilled in the art will understand and appreciate that methods can alternatively be represented as a series of interrelated states or events, such as in a state diagram. Moreover, not all illustrated acts may be required to implement methods in accordance with certain aspects of this disclosure.

Various embodiments of the subject innovation can be employed to use hardware and/or software to solve problems that are highly technical in nature (e.g., to visualize leg terminations with reference to an aircraft in real-time), that are not abstract and that cannot be performed as a set of mental acts by a human. Further, some of the processes performed can be performed by a specialized computer for carrying out defined tasks related leg combination termination visualization (e.g., determining whether a FIX INFO function of a flight management system of an aircraft is enabled, requesting a flight plan for an aircraft from a flight navigation database, receiving a flight plan from a navigation database, determining a group of leg combinations occurring along a flight plan, determining a leg combination of the leg combinations that satisfies a condition, providing the leg combination on a display device of an aircraft, and so on). In various aspects, the subject claimed innovation can provide technical improvements to the field of aviation navigation, particularly pilot and crew situational awareness, by providing desirable navigational information to a pilot or crew without distraction. Such navigational information can comprise leg terminations provided on one or more of a plurality of displays of varying types and mediums, and thus constitutes a concrete and tangible technical improvement in the prior art.

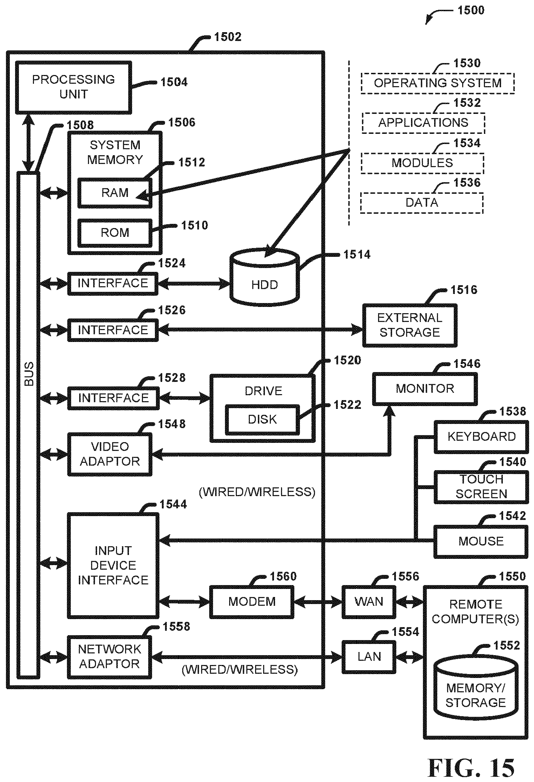

In order to provide additional context for various embodiments described herein, FIG. 15 and the following discussion are intended to provide a brief, general description of a suitable computing environment 1500 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 15, the example environment 1500 for implementing various embodiments of the aspects described herein includes a computer 1502, the computer 1502 including a processing unit 1504, a system memory 1506 and a system bus 1508. The system bus 1508 couples system components including, but not limited to, the system memory 1506 to the processing unit 1504. The processing unit 1504 can be any of various commercially available processors. Dual microprocessors and other multi-processor architectures can also be employed as the processing unit 1504.

The system bus 1508 can be any of several types of bus structure that can further interconnect to a memory bus (with or without a memory controller), a peripheral bus, and a local bus using any of a variety of commercially available bus architectures. The system memory 1506 includes ROM 1510 and RAM 1512. A basic input/output system (BIOS) can be stored in a non-volatile memory such as ROM, erasable programmable read only memory (EPROM), EEPROM, which BIOS contains the basic routines that help to transfer information between elements within the computer 1502, such as during startup. The RAM 1512 can also include a high-speed RAM such as static RAM for caching data.

The computer 1502 further includes an internal hard disk drive (HDD) 1514 (e.g., EIDE, SATA), one or more external storage devices 1516 (e.g., a magnetic floppy disk drive (FDD) 1516, a memory stick or flash drive reader, a memory card reader, etc.) and a drive 1520, e.g., such as a solid state drive, an optical disk drive, which can read or write from a disk 1522, such as a CD-ROM disc, a DVD, a BD, etc. Alternatively, where a solid state drive is involved, disk 1522 would not be included, unless separate. While the internal HDD 1514 is illustrated as located within the computer 1502, the internal HDD 1514 can also be configured for external use in a suitable chassis (not shown). Additionally, while not shown in environment 1500, a solid state drive (SSD) could be used in addition to, or in place of, an HDD 1514. The HDD 1514, external storage device(s) 1516 and drive 1520 can be connected to the system bus 1508 by an HDD interface 1524, an external storage interface 1526 and a drive interface 1528, respectively. The interface 1524 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1502, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1512, including an operating system 1530, one or more application programs 1532, other program modules 1534 and program data 1536. All or portions of the operating system, applications, modules, and/or data can also be cached in the RAM 1512. The systems and methods described herein can be implemented utilizing various commercially available operating systems or combinations of operating systems.

Computer 1502 can optionally comprise emulation technologies. For example, a hypervisor (not shown) or other intermediary can emulate a hardware environment for operating system 1530, and the emulated hardware can optionally be different from the hardware illustrated in FIG. 15. In such an embodiment, operating system 1530 can comprise one virtual machine (VM) of multiple VMs hosted at computer 1502. Furthermore, operating system 1530 can provide runtime environments, such as the Java runtime environment or the .NET framework, for applications 1532. Runtime environments are consistent execution environments that allow applications 1532 to run on any operating system that includes the runtime environment. Similarly, operating system 1530 can support containers, and applications 1532 can be in the form of containers, which are lightweight, standalone, executable packages of software that include, e.g., code, runtime, system tools, system libraries and settings for an application.

Further, computer 1502 can be enabled with a security module, such as a trusted processing module (TPM). For instance, with a TPM, boot components hash next in time boot components, and wait for a match of results to secured values, before loading a next boot component. This process can take place at any layer in the code execution stack of computer 1502, e.g., applied at the application execution level or at the operating system (OS) kernel level, thereby enabling security at any level of code execution.

A user can enter commands and information into the computer 1502 through one or more wired/wireless input devices, e.g., a keyboard 1538, a touch screen 1540, and a pointing device, such as a mouse 1542. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1504 through an input device interface 1544 that can be coupled to the system bus 1508, but can be connected by other interfaces, such as a parallel port, an IEEE 1394 serial port, a game port, a USB port, an IR interface, a BLUETOOTH^{®} interface, etc.

A monitor 1546 or other type of display device can be also connected to the system bus 1508 via an interface, such as a video adapter 1548. In addition to the monitor 1546, a computer typically includes other peripheral output devices (not shown), such as speakers, printers, etc.

The computer 1502 can operate in a networked environment using logical connections via wired and/or wireless communications to one or more remote computers, such as a remote computer(s) 1550. The remote computer(s) 1550 can be a workstation, a server computer, a router, a personal computer, portable computer, microprocessor-based entertainment appliance, a peer device or other common network node, and typically includes many or all of the elements described relative to the computer 1502, although, for purposes of brevity, only a memory/storage device 1552 is illustrated. The logical connections depicted include wired/wireless connectivity to a local area network (LAN) 1554 and/or larger networks, e.g., a wide area network (WAN) 1556. Such LAN and WAN networking environments are commonplace in offices and companies, and facilitate enterprise-wide computer networks, such as intranets, all of which can connect to a global communications network, e.g., the Internet.

When used in a LAN networking environment, the computer 1502 can be connected to the local network 1554 through a wired and/or wireless communication network interface or adapter 1558. The adapter 1558 can facilitate wired or wireless communication to the LAN 1554, which can also include a wireless access point (AP) disposed thereon for communicating with the adapter 1558 in a wireless mode.

When used in a WAN networking environment, the computer 1502 can include a modem 1560 or can be connected to a communications server on the WAN 1556 via other means for establishing communications over the WAN 1556, such as by way of the Internet. The modem 1560, which can be internal or external and a wired or wireless device, can be connected to the system bus 1508 via the input device interface 1544. In a networked environment, program modules depicted relative to the computer 1502 or portions thereof, can be stored in the remote memory/storage device 1552. It will be appreciated that the network connections shown are example and other means of establishing a communications link between the computers can be used.

When used in either a LAN or WAN networking environment, the computer 1502 can access cloud storage systems or other network-based storage systems in addition to, or in place of, external storage devices 1516 as described above, such as but not limited to a network virtual machine providing one or more aspects of storage or processing of information. Generally, a connection between the computer 1502 and a cloud storage system can be established over a LAN 1554 or WAN 1556 e.g., by the adapter 1558 or modem 1560, respectively. Upon connecting the computer 1502 to an associated cloud storage system, the external storage interface 1526 can, with the aid of the adapter 1558 and/or modem 1560, manage storage provided by the cloud storage system as it would other types of external storage. For instance, the external storage interface 1526 can be configured to provide access to cloud storage sources as if those sources were physically connected to the computer 1502.

The computer 1502 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The present invention may be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowcharts and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Further aspects of the invention are provided by the subject matter of the following clauses:
1. A method, comprising:
   retrieving, by a flight management system from a navigation database, a route of an aircraft associated with the flight management system;
   determining, by the flight management system, leg terminations on the route;
   determining, by the flight management system, a leg termination of the leg terminations to display; and
   displaying, by the flight management system, the leg termination.
2. The method of any preceding clause, wherein displaying the leg termination comprises displaying a path of the aircraft with respect to the leg termination.
3. The method of any preceding clause, wherein displaying the leg termination comprises displaying the leg termination on a heads-up display of an aircraft.
4. The method of any preceding clause, wherein displaying the leg termination comprises generating a two-dimensional or a three-dimensional visualization of the leg termination.
5. The method of any preceding clause, wherein determining the leg termination comprises determining a threshold distance, and wherein a distance between the leg termination and the aircraft is less than the threshold distance.
6. The method of any preceding clause, wherein the leg termination is a first leg termination and the distance is a first distance, and wherein the method further comprises:
   determining a second leg termination, wherein a second distance between the second leg termination and the aircraft is less than the threshold distance.
7. The method of any preceding clause, wherein the flight management system comprises a FIX INFO function, and wherein the flight management system enables the FIX INFO function to display the leg termination without an input from a user of the flight management system.
8. A system, comprising:
   a flight management computer, a processor, and a memory that stores executable instructions that, when executed by the processor, facilitate performance of operations, comprising:
   receiving, from a flight navigation database, a flight plan for an aircraft;
   determining a leg combination along the flight plan;
   generating a visual of a termination associated with the leg combination; and
   displaying the visual on a display communicatively coupled to the flight management computer.
9. The system of any preceding clause, wherein the visual comprises an area associated with the termination, and wherein a trajectory of the aircraft intersecting with the area corresponds to a valid heading for the aircraft.
10. The system of any preceding clause, wherein the area is represented by a cylinder.
11. The system of any preceding clause, wherein the area is represented by a circle.
12. The system of any preceding clause, wherein a shape and a size of the area is continuously updated by the flight management computer in response to a change of an extrinsic factor.
13. A non-transitory machine-readable medium, comprising executable instructions that, when executed by a processor of a voice-activated device, facilitate performance of operations, comprising:
   determining whether a FIX INFO function of a flight management system of an aircraft is enabled; and
   in response to determining that the FIX INFO function is enabled:
      requesting a flight plan for the aircraft from a flight navigation database,
      in response to requesting the flight plan, receiving the flight plan from the flight navigation database,
      determining a group of ARINC 424 type leg combinations occurring along the flight plan,
      determining a termination of an ARINC 424 type leg combination of the ARINC 424 type leg combinations that satisfies a condition, and
      providing the termination on a display device of the aircraft.
14. The non-transitory machine-readable medium of any preceding clause, wherein providing the termination on the display device comprises determining a region associated with the termination, and wherein a heading of the aircraft intersecting with the region corresponds to a valid heading and a heading of the aircraft not intersecting with the region corresponds to an invalid heading.
15. The non-transitory machine-readable medium of any preceding clause, wherein the region is determined using machine learning to dynamically determine a size and a shape of the region in real-time.
16. The non-transitory machine-readable medium of any preceding clause, wherein the display device is a cockpit display device, and wherein the operations further comprise:
   providing the termination on a passenger display device.
17. The non-transitory machine-readable medium of any preceding clause, wherein the display device comprises an eyewear apparatus.
18. The non-transitory machine-readable medium of any preceding clause, wherein the display device comprises an augmented reality display device, and wherein providing the termination comprises superimposing the termination on an exterior view, in space, relative to the aircraft.
19. The non-transitory machine-readable medium of any preceding clause, wherein the display device includes a depiction of the aircraft and another aircraft within a defined range of the aircraft.
20. The non-transitory machine-readable medium of any preceding clause, wherein the other aircraft has a trajectory that intersects a leg the group of ARINC 424 type leg combinations, and wherein determining the termination that satisfies a condition comprises determining a termination that avoids a collision with the other aircraft.

## Claims

1. A method, comprising:
retrieving, by a flight management system from a navigation database, a route of an aircraft associated with the flight management system;
determining, by the flight management system, leg terminations on the route;
determining, by the flight management system, a leg termination of the leg terminations to display; and
displaying, by the flight management system, the leg termination.

2. The method of claim 1, wherein displaying the leg termination comprises displaying a path of the aircraft with respect to the leg termination.

3. The method of any preceding claim, wherein displaying the leg termination comprises displaying the leg termination on a heads-up display of an aircraft.

4. The method of any preceding claim, wherein displaying the leg termination comprises generating a two-dimensional or a three-dimensional visualization of the leg termination.

5. The method of any preceding claim, wherein determining the leg termination comprises determining a threshold distance, and wherein a distance between the leg termination and the aircraft is less than the threshold distance.

6. The method of any preceding claim, wherein the flight management system comprises a FIX INFO function, and wherein the flight management system enables the FIX INFO function to display the leg termination without an input from a user of the flight management system.

7. A system, comprising:
a flight management computer, a processor, and a memory that stores executable instructions that, when executed by the processor, facilitate performance of operations, comprising:
receiving, from a flight navigation database, a flight plan for an aircraft;
determining a leg combination along the flight plan;
generating a visual of a termination associated with the leg combination; and
displaying the visual on a display communicatively coupled to the flight management computer.

8. The system of claim 7, wherein the visual comprises an area associated with the termination, and wherein a trajectory of the aircraft intersecting with the area corresponds to a valid heading for the aircraft.

9. The system of claim 8, wherein the area is represented by a cylinder or a circle.

10. The system of claim 8 or 9, wherein a shape and a size of the area is continuously updated by the flight management computer in response to a change of an extrinsic factor.

11. A non-transitory machine-readable medium, comprising executable instructions that, when executed by a processor of a voice-activated device, facilitate performance of operations, comprising:
determining whether a FIX INFO function of a flight management system of an aircraft is enabled; and
in response to determining that the FIX INFO function is enabled:
requesting a flight plan for the aircraft from a flight navigation database,
in response to requesting the flight plan, receiving the flight plan from the flight navigation database,
determining a group of ARINC 424 type leg combinations occurring along the flight plan,
determining a termination of an ARINC 424 type leg combination of the ARINC 424 type leg combinations that satisfies a condition, and
providing the termination on a display device of the aircraft.

12. The non-transitory machine-readable medium of claim 11, wherein providing the termination on the display device comprises determining a region associated with the termination, and wherein a heading of the aircraft intersecting with the region corresponds to a valid heading and a heading of the aircraft not intersecting with the region corresponds to an invalid heading.

13. The non-transitory machine-readable medium of claim 11 or 12, wherein the display device is a cockpit display device, and wherein the operations further comprise:
providing the termination on a passenger display device.

14. The non-transitory machine-readable medium of any of claims 11 to 13, wherein the display device comprises an augmented reality display device, and wherein providing the termination comprises superimposing the termination on an exterior view, in space, relative to the aircraft.

15. The non-transitory machine-readable medium of any of claims 11 to 14, wherein the display device includes a depiction of the aircraft and another aircraft within a defined range of the aircraft.
